(19) **Europäisches Patentamt**

**European Patent Office**

**Office européen des brevets**

(11) **EP 1 091 909 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(51) Int Cl.⁷: **C02F 1/28**, C02F 1/62, B01J 20/06

(21) Anmeldenummer: **99926421.1**

(86) Internationale Anmeldenummer:
**PCT/EP99/03626**

(22) Anmeldetag: **26.05.1999**

(87) Internationale Veröffentlichungsnummer:
**WO 99/062826 (09.12.1999 Gazette 1999/49)**

(54) **VERFAHREN ZUR ABSORPTION VON SCHWERMETALLEN**

METHOD FOR ABSORBING HEAVY METALS

PROCEDE POUR L'ABSORPTION DE METAUX LOURDS

(84) Benannte Vertragsstaaten:
**AT CH DE FR GB LI**

(30) Priorität: **30.05.1998 DE 19824379**

(43) Veröffentlichungstag der Anmeldung:
**18.04.2001 Patentblatt 2001/16**

(73) Patentinhaber: **Bilfinger Berger Umwelt GmbH 68165 Mannheim (DE)**

(72) Erfinder:
• **ECKER, Michael Dr.**
  **D-85123 Karlskron (DE)**

• **PÖLLMANN, Herbert**
  **D-90765 Fürth (DE)**

(74) Vertreter: **Isenbruck, Günter, Dr.**
  **Isenbruck, Bösl, Hörschler, Wichmann, Huhn, Patentanwälte**
  **Theodor-Heuss-Anlage 12**
  **68165 Mannheim (DE)**

(56) Entgegenhaltungen:
  **EP-A- 0 369 275       EP-A- 0 833 196**
  **DE-A- 4 037 326       US-A- 4 566 986**

**Beschreibung**

Die Erfindung betrifft Verfahren zur Absorption von Schwermetallen oder Schwermetallionen unter Bildung von Magnesiumferrathydraten und Magnesiumaluminatferrathydraten.

In vielen Bereichen fallen Schwermetalle bzw. Schwermetallionen in festen, flüssigen und/oder gasförmigen Medien an, so z.B. in Rauchgasen von Verbrennungsanlagen, in industriellen Abwässern, in kontaminiertem Grundwasser, in festen Abfallstoffen und in Deponiemüll. Ihre Nichtabbaubarkeit, ihre Toxizität und ihre Akkumulationsfähigkeit in Organismen bedingen ein hohes Gefährdungspotential für die Umwelt.

Es existieren verschiedene Möglichkeiten, um Schwermetalle aus diesen Medien zu entfernen. So ist es z.B. möglich, Schwermetallionen wie z.B. Nickel, Cadmium, Kupfer, Zink, Kobalt und Blei aus Wasser mit Hilfe von Umkehrosmose oder mit organischen und anorganischen Fällungsmitteln zu entfernen. Diese Verfahren werden als teuer, aurwendig und zum Teil ökologisch nicht unbedenklich angesehen. So ist aus der EP-A-0 518 379 ein Verfahren bekannt, um anorganische Schadstoffe wie z.B. ein- oder mehrwertige Schwermetallkationen mit Hilfe wasserlöslicher Aluminate zu entfernen. Die genannten Schadstoffe werden durch Chemisorption aus dem Wasser entfernt, wobei als Absorbens entweder eine wäßrige Lösung eines oder mehrerer wasserlöslicher Aluminate oder ein Absorptionsmittel dient, das aus einem oder mehreren wasserlöslichen Aluminaten und einer oder mehreren Calciumverbindungen hergestellt wird. Die Absorptionsmittel weisen lamellare Schichtstrukturen auf und entsprechen dem Typus $[Ca_4\,Al_2\,(OH)_{12}]^{2+}\,[CO_3\,aq]^{2-}$, $[Ca_4\,Al_2\,(OH)_{12}]^{2+}\,[OH/0,5\,CO_3\,aq]^{2-}$ und/oder $[Ca_4\,Al_2(OH)_{12}]^{2+}\,[(OH)_2\,aq]^{2-}$, wobei aq Kristallwasser darstellt. Nachteilhaft an dem vorstehend genannten Absorptionsmittel ist, daß für deren Herstellung der Einsatz von teuren Aluminaten wie beispielsweise Natriumaluminat oder Tonerdezement notwendig ist, wodurch das entsprechende Absorptionsverfahren an wirtschaftlicher Attraktivität verliert. Ein Nachteil ist, daß der pH-Bereich, in dem sich die laminaren Schichtstrukturen bilden und stabil sind, mit pH 7 bis 14 recht hoch ist. Da sich Schwermetallverbindungen bevorzugt in sauren pH-Bereichen lösen und dadurch eine Remobilisierung der giftigen Schwermetalle erfolgen kann, muß in der Praxis eine Puffersubstanz zur Neutralisierung zugegeben werden. Die Pufferung bewirkt also einen weiteren Verfahrensschritt und erhöht die Behandlungskosten.

Die DE 195 30 801 beschreibt ein Verfestigungsverfahren für Rotschlamm, wobei dieser wasserhaltig ist und Al- und Fe-hydroxid und Hydroxylsodalith enthält. Dabei wird ein reaktives, anorganisches Salz zugesetzt, das einen bestimmten relativen Maximalgehalt an Sulfat aufweist. Gemäß dieser Schrift können sich, wenn Magnesium vorhanden ist, Hydratphasen vom Typ Hydrotalkit oder Sjögrenit/Pyroaurit bilden, wobei Magnesium durch Schwermetalle ersetzt werden kann.

Der Erfindung liegt die Aufgabe zugrunde, ein Verfahren zu schaffen, das die Absorption von Schwermetallen aus festen, flüssigen und/oder gasförmigen Medien ermöglicht. Das Verfahren soll effektiv und wirtschaftlich sein.

Erfindungsgemäß wird ein Verfahren zur Absorption von Schwermetallen oder Schwermetallionen aus einem Schwermetalle und/oder Schwermetallionen enthaltenden Medium bereitgestellt. Dieses ist dadurch gekennzeichnet, daß das Medium mit Eisenhydroxid oder einem Eisenhydroxid enthaltenden Gemisch und einer Komposition, enthaltend mindestens eine Substanz aus der Gruppe Magnesiumhydroxid, Magnesiumoxid, teildecarbonisierter Dolomit, behandelt wird, wobei bezogen auf eingesetztes Eisenhydroxid und Substanzen der Gruppe Magnesiumhydroxid, Magnesiumoxid, teildecarbonisierter Dolomit, das molare Verhältnis zwischen Eisen und Magnesium zwischen 1 : 1 und 1 : 10, beträgt.

Eisenhydroxid, Magnesiumhydroxid, Magnesiumoxid und teildecarbonisierter Dolomit können somit unmittelbar bei dem Verfahren eingesetzt werden, ohne zuvor notwendigerweise zu Magnesiumferrathydraten bzw. Magnesiumaluminatferrathydraten umgesetzt zu werden. Der dabei entstehende, Schwermetalle und/oder Schwermetallionen enthaltende Feststoff entspricht im Prinzip den Magnesiumferrathydraten bzw. Magnesiumaluminatferrathydraten, die absorbierte Schmermetalle und/oder Schwermetallionen aufweisen. Ob dabei intermediär Magnesiumferrathydrate und/oder Magnesiumaluminatferrathydrate gebildet werden, ist schwer nachzuweisen.

Als Behandlung des Mediums mit Eisenhydroxid oder einem Eisenhydroxid enthaltenden Gemisch und einer Komposition soll im weitesten Sinne das in Kontaktbringen verstanden werden. Prinzipiell sind unter Behandlung in diesem Zusammenhang u.a. Mischvorgänge aller Art zu verstehen. In der Regel findet die Behandlung in Gegenwart von Wasser statt.

Die Art und Weise wie das Absorptionsmittel eingesetzt wird, hängt im Einzelfall von der zu verrichtenden Aufgabe ab. Prinzipiell kommen dabei u.a. Mischvorgänge aller Art - also das Mischen von Absorptionsmittel und Medium, sowie das Strömen des Mediums durch Absorptionsmittel enthaltende Schüttungen, in Frage.

Die Komposition besteht häufig nur aus einer Substanz. Das Medium kann Phasen aller Aggregatzustände (fest, flüssig, gasförmig) aufweisen. Somit kann das Medium in flüssiger und/oder gasförmiger und/oder fester Form vorliegen.

Ein in Frage kommendes Medium wäre zum Beispiel Klärschlamm, der aus flüssigen (zum Beispiel verunreinigtes Wasser) und festen Phasen (zum Beispiel Sand) besteht.

Das Schwermetalle und/oder Schwermetallionen enthaltende Medium liegt häufig als verunreinigtes Wasser, Rauchgas oder kontaminierte Erde vor.

Es gelingt in festen, flüssigen und/oder gasförmigen Medien enthaltene Schwermetalle oder Schwermetallionen an so entstandene Magnesiumferrathydraten oder Magnesiumaluminatferrathydraten zu absorbieren.

Magnesiumferrathydrate besitzen folgenden grundsätzlichen chemischen Aufbau:

$$[Mg^{2+}_{1-x}Fe^{3+}_{x}(OH)_2]^{x+} [(A^{y-})_{x/y} \cdot (H_2O)_n]^{x-}$$

wobei

$$A = OH^-, Cl^-, Br^-, I^-, F^-, SO_4^{2-}, CO_3^{2-}$$

$$0 \leq x \leq 1$$

$$y = 1 \text{ oder } 2$$

Im Gegensatz zu den Magnesiumferrathydraten weisen die Magnesiumaluminatferrathydrate auch das Element Al auf.

Magnesiumaluminatferrathydrate besitzen folgenden grundsätzlichen chemischen Aufbau:

$$[Mg^{2+}_{1-x}Me^{3+}_{x}(OH)_2]^{x+}[(A^{y-})_{xy} \cdot (H_2O)_n]^{x-}$$

wobei

$$Me = p\,Al + q\,Fe \; ; \; p > 0 \text{ und } p < 1 \; ; \; q + p = 1$$

$$A = OH^-, Cl^-, Br^-, I^-, F^-, SO_4^{2-}, CO_3^{2-}$$

$$0 \leq x \leq 1$$

$$y = 1 \text{ oder } 2$$

Magnesiumferrathydrate oder Magnesiumaluminatferrathydrate enthalten in der Regel einen hohen kristallinen Anteil. Dabei können diese zum Beispiel komplexe Doppelschichtstrukturen bilden, die aus einer positiv geladenen Hauptschicht der Form

$$[Mg^{2+}_{1-x}Me^{3+}_{x}(OH)_2]^{x+}$$

und einer negativ geladenen Zwischenschicht der Form

$$[(A^{y-})_{xy} \cdot (H_2O)_n]^{x-}$$

bestehen (Me = Al, Fe ; A = OH⁻, Cl⁻, Br⁻, I⁻, F-, $SO_4^{2-}$, $CO_3^{2-}$; $0 \leq x \leq 1$ ; y = 1 und/oder 2). Die Phasen kristallisieren bevorzugt in hexagonaler bzw. pseudohexagonaler Symmetrie und bilden Plättchen von wenigen $\mu$m

Durchmesser.

Als Eisenhydroxid sollen alle dreiwertigen Eisenverbindungen verstanden werden, die Hydroxylionen enthalten. Insbesondere eignet sich als Eisenhydroxid $Fe(OH)_3 \cdot x\,H_2O$. Dieses rotbraune "Hydrogel" entsteht zum Beispiel durch Hydrolyse von gelösten dreiwertigen Eisenionen oder aber auch bei der Grundwasseraufbereitung, durch die Oxidation zweiwertiger Eisenionen. Prinzipiell können natürlich auch zweiwertige Eisenverbindungen eingesetzt werden, falls das Eisen anschließend zu dreiwertigem Eisen oxidiert wird.

Als Schwermetalle sollen die Elemente Rb, Cs, Fr, Sr, Ba, Ra, Ga, In, Tl, Ge, Sn, Pb, As, Sb, Bi, Te, Po, Fe, Co, Ni, Ru, Rh, Pd, Os, Ir, Pt, Cu, Ag, Au, Zn, Cd, Hg, Sc, Y, La, Ac, Ti, Zr, Hf, V, Nb, Ta, Cr, Mo, W, Mn, Re, sowie Lanthanoide und Actinoide verstanden werden. Unter Schwermetallionen sollen negativ geladene (zum Beispiel Arsenate oder Arsenite) oder positiv geladene Schwermetalle oder Verbindungen dieser, verstanden werden. In wäßriger Phase liegen Schwermetallionen häufig in gelöster Form vor. Dabei können einkernige oder mehrkemige Komplexe vorliegen. Als Liganden dieser Komplexe fungieren dabei häufig Hydroxylionen und Wassermoleküle. Schwermetalle und insbesondere Schwermetallionen können aber auch als Komplexe vorliegen, die anderen Liganden, wie z.B. EDTA (Ethylendiamintetraessigsäure) oder Ammoniak, aufweisen.

Die Schwermetalle oder Schwermetallionen aufweisenden Absorptionsmittel sind auch im sauren pH-Bereich stabil - es erfolgt in der Regel keine Freisetzung der Schwermetalle oder Schwermetallionen. Ein weiterer Vorteil dieser Verbindungen liegt in ihrer einfachen Synthese aus preisgünstigen, ökologisch unbedenklichen und leicht erhältlichen Ausgangssubstanzen wie z.B. Eisenhydroxid, Magnesiumoxid, Magnesiumhydroxid oder teildecarbonatisierter Dolomit.

Die Wirkung der Magnesiumferrathydrate oder Magnesiumaluminatferrathydrate als Absorptionsmittel könnte vielfach darauf beruhen, daß Schwermetallkationen anstelle des Magnesiums in das Kristallgitter eingebaut werden - dies wäre mit einem Ionenaustauschvorgang vergleichbar.

Es kann zumindest eine Teilmenge der in dem Medium enthaltenden Schwermetalle und/oder Schwermetallionen als Komplexe vorliegen. Dabei können die Komplexe bei der Absorption "gespalten" werden, indem das Schwermetall oder das Schwermetallion als solches absorbiert wird und Liganden des Komplexes freigesetzt werden. Es können mit dem erfindungsgemäßen Verfahren Liganden aus Komplexen, die hohe Komplexbildungskonstanten aufweisen (zum Beispiel viele Cyanid und EDTA- Komplexe) abgespalten werden und die entsprechenden Zentralatome bzw. Zentralionen absorbiert werden.

Die Absorption wird in der Regel bei einem pH-Wert von 2 bis 14, bevorzugt von 4 bis 9, durchgeführt.

Bezogen auf eingesetztes Eisenhydroxid und Substanzen der Gruppe Magnesiumhydroxid, Magnesiumoxid, teildecarbonisierter Dolomit, beträgt das molare Verhältnis zwischen Eisen und Magnesium erfindungsgemäß zwischen 1 : 1 und 1 : 10, jedoch bevorzugt zwischen 1:2 und 1:4.

Häufig wird Eisenhydroxid und mindestens einer Substanz aus der Gruppe Magnesiumhydroxid, Magnesiumoxid, teildecarbonisierter Dolomit, vor der Behandlung des Mediums, zu einem Pulver oder Granulat vermischt. Häufig wird Eisenhydroxid und mindestens eine Substanz aus der Gruppe Magnesiumhydroxid, Magnesiumoxid, teildecarbonisierter Dolomit, vor der Behandlung des Mediums, zu einer wäßrigen Dispersion vermischt. Es besteht die Möglichkeit, als Eisenhydroxid Enteisenungsrückstände aus der Wasseraufbereitung ("Wasserwerksschlamm") einzusetzen. Diese Rückstände fallen in großen Mengen bei der Trinkwasseraufbereitung an und können vor der Zugabe von Magnesiumhydroxid und/oder Magnesiumoxid und/oder teildecarbonatisiertem Dolomit mit Wasser zu einer fließfähigen Masse vermischt werden. Vorteilhafterweise wird der pH-Wert des zu reinigenden Wassers auf einen Wert von 2 bis 14 eingestellt.

Als Behandlung soll in diesem Zusammenhang im weitesten Sinne das in Inkontaktbringen verstanden werden. Prinzipiell sind unter Behandlung in diesem Zusammenhang u.a. Mischvorgänge aller Art zu verstehen.

Magnesiumferrathydraten können durch intensive Durchmischung (zum Beispiel mittels eines Zwangsmischers) von Eisenhydroxid mit mindestens einer Substanz aus der Gruppe Magnesiumhydroxid, Magnesiumoxid, teildecarbonisierter Dolomit, in Gegenwart von Wasser entstehen. Mechanistisch könnte es sich dabei um eine hydraulische Reaktion handeln, bei der Wasser mit Eingebunden wird. Neben den vorstehend genannten Reaktionskomponenten kann noch mindestens eine Aluminiumverbindung wie z.B. Aluminiumhydroxid oder Tonerdezement hinzugegeben werden. Geeignete Aluminiumverbindungen können aber bereits als Verunreinigungen in den eingesetzten, vorstehend genannten Ausgangsstoffen vorliegen. Der Temperaturbereich für die Bildung von Magnesiumferrathydraten und Magnesiumaluminatferrathydraten liegt in der Regel zwischen 0 und 100° C, bevorzugt zwischen 5 und 30 °C. Vorteilhafterweise liegt bei den reagierenden Einsatzstoffen das molare Verhältnis zwischen Magnesium und Eisen zwischen 1:1 und 4:1. Bevorzugt werden die Ausgangsverbindungen trocken vorgemischt und anschliessend mit Wasser vermischt. Auf diese Weise ist es auch möglich, das Absorptionsmittel in situ in beispielsweise einem zu reinigenden Gas zu bilden. Die Eisenund Magnesiumverbindungen können z.B. in Rauchgase eingeblasen werden, die geringe Wassermengen enthalten. Das bei diesem Vorgang entstehende lamellare Absorptionsmitttel kann dann Schwermetalle aus dem Rauchgas entfernen.

Zumindest eine Teilmenge der Schwermetalle und/oder Schwermetallionen kann als Komplexe vorliegen. Bei der Absorption werden in der Regel die Liganden der Komplexe freigesetzt und die Schwermetalle bzw. Schwermetallionen als solche absorbiert. Das Verfafren kann somit auch zum Beispiel zur Entfärbung verwendet werden, insbesondere dann, wenn farbige Komplexe oder andere farbige Schwermetallverbindungen als Farben oder Pigmente vorliegen, bzw. in Farben oder Pigmenten enthalten sind. Andere wichtige Anwendungen sind Gewässerschutz, Abwasserreinigung, Trinkwasseraufarbeitung, Bodensanierung oder Dekontaminierung (z.B. von Bauschutt).

Magnesiumferrathydrate oder Magnesiumaluminatferrathydrate sowie deren Ausgangsstoffe sind preisgünstig und umweltverträglich. Schwermetalle oder Schwermetallionen werden von Magnesiumferrathydraten oder Magnesiumaluminatferrathydraten so absorbiert, daß in der Regel eine Loslösung der Schwermetalle oder Schwermetallionen aus dem Absorptionsmittel erheblich erschwert ist. Aus diesem Grund sind Magnesiumferrathydrate oder Magnesiumaluminatferrathydrate, die absorbierte Schwermetalle oder Schwermetallionen enthalten, besonders gut zur langfristigen Lagerung, zum Beispiel auf einer Deponie, geeignet.

Im folgenden soll die Erfindung anhand von Ausführungsbeispielen näher erläutert werden.

**Beispiel 1:** Absorption von Nickelionen aus wäßriger Lösung

Zu 40 ml einer wäßrigen Nickellösung mit einer Konzentration von 10 000 mg/l Nickel wird ein Gemisch aus 1,6 g MgO und 3,9 g Wasserwerksschlamm (im wesentlichen bestehend aus Fe(OH)$_3$ · x H$_2$O) gegeben. Nach einer Reaktionszeit von einer Stunde stellt sich eine Lösungskonzentration von 0,3 mg/l Nickel ein.

**Beispiel 2:** Absorption von Nickelionen aus wäßriger Lösung

Zu 40 ml einer wäßrigen Nickellösung mit einer Konzentration von 1000 mg/l Nickel werden 1,6 g MgO und 3,9 g Wasserwerksschlamm (im wesentlichen bestehend aus Fe(OH)$_3$·x H$_2$O) gegeben. Die Lösung wird 15 Minuten gerührt und anschließend filtriert.
Der Nickelgehalt im Filtrat wird auf 0,07 mg/l abgesenkt.

**Beispiel 3:** Gleichzeitige Entfernung von Nickel- und Kupferionen.

40 ml einer wäßrige Lösung, enthaltend 1000 mg/l Kupfer und 1000 mg/l Nickel, wird durch die Zugabe von 1,6 g MgO und 3,9 g Wasserwerksschlamm (im wesentlichen bestehend aus Fe(OH)$_3$·x H$_2$O) 15 Minuten gerührt. Die Gesamtkonzentration an Cu und Ni in der Lösung beträgt anschließend 0,1 mg/l.

**Beispiel 4:** Absorption von Nickelionen aus festen Medien.

0,5 g $NiCl_2$ wird mit 1,6 g MgO und 1,6 g frisch gefälltem Eisenhydroxyd $(Fe(OH)_3 \cdot x\,H_2O)$ vermischt. Bei der Elution mit einem Wasser/Feststoff-Wert von 10 : 1 (durchgeführt nach Din 38 414 - im Prinzip: Zugabe von Wasser und Feststoff in einem Masseverhältnis von 10 : 1 und 24 stündiges "Überkopfschütteln" in entionisiertem Wasser) stellt sich eine Gleichgewichtskonzentration von 0,15 mg/l Nickel im Eluat ein (Vergleich: theoretische Gleichgewichtskonzentration bei nicht vorhandener absorbierender Wirkung = 5,9 g/l Nickel) .

**Beispiel 5:**

500 g Granulat, das durch Mischen von 5 Teilen Wasserwerksschlamm (im wesentlichen bestehend aus $Fe(OH)_3 \cdot x\,H_2O$) mit 1 Teil Magnesiumoxid in einem Zwangsmischer hergestellt worden war, wurden in einen zylindrischen Filterbehälter d = 50 mm gegeben. Darüber wurde Wasser, das mit $NiCl_2$ ($c_{Ni}$ = 50 mg/l) versetzt und auf einen pH-Wert von 4 bis 5 angesäuert worden war, mit einer Durchflußgeschwindigkeit von 1 l/h geleitet. Die Konzentration an Ni im Filterauslauf war nach Durchfluß von 350 1 kleiner als 0,02 mg/l.

**Beispiel 6:**

Versuchsdurchführung und Bedingungen wie in Beispiel 5 - jedoch als Schwermetall(ion) anstatt Ni Cu eingesetzt (vorgegebene Konzentration $c_{Cu}$ = 50 mg/l). Die Konzentration an Cu im Filterauslauf war nach Durchfluß von 300 1 kleiner als 0,02 mg/l.

**Beispiel 7:**

Versuchsdurchführung und Bedingungen wie in Beispiel 5 - jedoch als Schwermetall(ion) anstatt Ni Zn eingesetzt (vorgegebene Konzentration $c_{Zn}$ = 50 mg/l). Die Konzentration an Zn im Filterauslauf war nach Durchfluß von 200 1 kleiner als 0,02 mg/l.

**Beispiel 8:**

Versuchsdurchführung und Bedingungen wie in Beispiel 5 - jedoch als Schwermetall(ion) anstatt Ni Cd eingesetzt (vorgegebene Konzentration $c_{Cd}$ = 50 mg/l). Die Konzentration an Cd im Filterauslauf war nach Durchfluß von 400 1 kleiner als 0,02 mg/l.

**Beispiel 9:**

Versuchsdurchführung und Bedingungen wie in Beispiel 5 - jedoch als Schwermetall(ion) anstatt Ni Pb eingesetzt (vorgegebene Konzentration $c_{Pb}$ = 50 mg/l). Die Konzentration an Pb im Filterauslauf war nach Durchfluß von 400 1 kleiner als 0,02 mg/l.

**Beispiel 10:**

500 g Granulat, das durch Mischen von 5 Teilen Wasserwerksschlamm (im wesentlichen bestehend aus $Fe(OH)_3 \cdot x\,H_2O$) mit 1 Teil Magnesiumoxid in einem Zwangsmischer hergestellt worden war, wurden in einen zylindrischen Filterbehälter d = 50 mm gegeben. Darüber wurde Wasser, das mit $NiCl_2$ ($c_{Ni}$ = 50 g/l) und EDTA (EDTA wurde im Überschuß zugegeben, so daß die Nickelionen als EDTA-Komplexe vorlagen) versetzt und auf einen pH-Wert von 4 bis 5 angesäuert worden war, mit einer Durchflußgeschwindigkeit von 0,2 l/h geleitet. Die Konzentration an Ni im Filterauslauf war nach Durchfluß von 90 l kleiner als 0,01 mg/l.

**Beispiel 11:**

200 g Granulat, das durch Mischen von 5 Teilen Wasserwerksschlamm (im wesentlichen bestehend aus $Fe(OH)_3 \cdot x\,H_2O$) mit 1 Teil Magnesiumoxid in einem Zwangsmischer hergestellt worden war, wurden in einen zylindrischen Filterbehälter d = 20 mm gegeben. Darüber wurde Wasser, das 50 mg/l Kupfer in Form eines Tetraminkomplexes enthielt, mit einer Durchflußgeschwindigkeit von 0,2 l/h geleitet. Die Konzentration an Kupfer im Filterauslauf war nach Durchfluß von 50 1 kleiner als 0,01 mg/l.

Die vorstehend aufgeführten Beispiele zeigen, daß durch den kombinierten Einsatz der Einzelkomponenten Eisenhydroxid und Magesiumoxid, mit Schwermetallionen belastete wäßrige Lösungen weitgehend von Schwermetallionen befreit werden können. Es wird außerdem gezeigt, daß selbst Schwermetallionen, die in Form von stabilen Komplexen (mit hoher Komplexbildungskonstante) vorliegen, effektiv absorbiert werden können. Weiterhin wird gezeigt, daß durch den kombinierten Einsatz von Eisenhydroxid und Magesiumoxid auch Schwermetallionen aus Feststoffen absorbiert werden können.

**Patentansprüche**

1.  Verfahren zur Absorption von Schwermetallen oder Schwermetallionen aus einem Schwermetalle und/oder Schwermetallionen enthaltenden Medium, **dadurch gekennzeichnet, daß** das Medium mit Eisenhydroxid oder einem Eisenhydroxid enthaltenden Gemisch, und einer Komposition, enthaltend mindestens eine Substanz aus der Gruppe Magnesiumhydroxid, Magnesiumoxid, teildecarbonisierter Dolomit, behandelt wird, wobei bezogen auf eingesetztes Eisenhydroxid und Substanzen der Gruppe Magnesiumhydroxid, Magnesiumoxid, teildecarbonisierter Dolomit, das molare Verhältnis zwischen Eisen und Magnesium zwischen 1 : 1 und 1 : 10, beträgt.

**2.** Verfahren nach Anspruch 1, **dadurch gekennzeichnet, daß** zumindest eine Teilmenge der in dem Medium enthaltenden Schwermetalle und/oder Schwermetallionen als Komplexe vorliegen.

**3.** Verfahren nach Anspruch 1, **dadurch gekennzeichnet, daß** bezogen auf eingesetztes Eisenhydroxid und Substanzen der Gruppe Magnesiumhydroxid, Magnesiumoxid, teildecarbonisierter Dolomit, das molare Verhältnis zwischen Eisen und Magnesium zwischen 1 : 2 und 1 : 4, beträgt.

**4.** Verfahren nach Anspruch 1, **dadurch gekennzeichnet, daß** Eisenhydroxid und mindestens eine Substanz aus der Gruppe Magnesiumhydroxid, Magnesiumoxid, teildecarbonisierter Dolomit, vor der Behandlung des Mediums, zu einem Pulver oder Granulat vermischt werden.

**5.** Verfahren nach Anspruch 1, **dadurch gekennzeichnet, daß** Eisenhydroxid und mindestens eine Substanz aus der Gruppe Magnesiumhydroxid, Magnesiumoxid, teildecarbonisierter Dolomit, vor der Behandlung des Mediums, zu einer wäßrigen Dispersion vermischt werden.

**Claims**

**1.** A process for absorbing heavy metals or heavy metal ions from a medium containing heavy metals or heavy metal ions, **characterised in that** the medium is treated with iron hydroxide or a mixture containing iron hydroxide and a composition containing at least one substance from the group comprising magnesium hydroxide, magnesium oxide, partially decarbonised dolomite, wherein, relative to the introduced iron hydroxide and substances from the group comprising magnesium hydroxide, magnesium oxide, partially decarbonised dolomite, the molar ratio between iron and magnesium is between 1:1 and 1:10.

**2.** A process according to claim 1, **characterised in that** at least a proportion of the heavy metals and/or heavy metal ions present in the medium is present as complexes.

**3.** A process according to claim 1, **characterised in that**, relative to the introduced iron hydroxide and substances from the group comprising magnesium hydroxide, magnesium oxide, partially decarbonised dolomite, the molar ratio between iron and magnesium is between 1:2 and 1:4.

**4.** A process according to claim 1, **characterised in that** iron hydroxide and at least one substance from the group comprising magnesium hydroxide, magnesium oxide, partially decarbonised dolomite are mixed together prior to treatment of the medium to yield a powder or granular product.

**5.** A process according to claim 1, **characterised in that** iron hydroxide and at least one substance from the group comprising magnesium hydroxide, magnesium oxide, partially decarbonised dolomite are mixed together prior to treatment of the medium to yield an aqueous dispersion.

**Revendications**

**1.** Procédé pour l'absorption de métaux lourds ou d'ions de métaux lourds à partir d'un milieu contenant des métaux lourds et/ou des ions de métaux lourds, **caractérisé en ce que** le milieu est traité avec de l'hydroxyde de fer ou un mélange contenant de l'hydroxyde de fer, et avec une composition contenant au moins une substance choisie dans l'ensemble comprenant l'hydroxyde de magnésium, l'oxyde de magnésium, la dolomite partiellement décarbonisée, le rapport en moles entre le fer et le magnésium étant compris entre 1:1 et 1:10, par rapport à l'hydroxyde de fer utilisé et aux substances de l'ensemble comprenant l'hydroxyde de magnésium, l'oxyde de magnésium, la dolomite partiellement décarbonisée.

**2.** Procédé selon la revendication 1, **caractérisé en ce qu'**au moins une partie des métaux lourds et/ou des ions de métaux lourds contenus dans le milieu se présentent sous forme de complexes.

**3.** Procédé selon la revendication 1, **caractérisé en ce que** le rapport en moles entre le fer et le magnésium est compris entre 1:2 et 1:4, par rapport à l'hydroxyde de fer utilisé et aux substances de l'ensemble comprenant l'hydroxyde de magnésium, l'oxyde de magnésium, la dolomite partiellement décarbonisée.

**4.** Procédé selon la revendication 1, **caractérisé en ce que** l'hydroxyde de fer et au moins une substance de l'ensemble comprenant l'hydroxyde de magnésium, l'oxyde de magnésium, la dolomite partiellement décarbonisée, sont, avant traitement du milieu, mélangés pour donner une poudre ou un granulé.

**5.** Procédé selon la revendication 1, **caractérisé en ce que** l'hydroxyde de fer et au moins une substance de l'ensemble comprenant l'hydroxyde de magnésium, l'oxyde de magnésium, la dolomite partiellement décarbonisée, sont, avant traitement du milieu, mélangés pour donner une dispersion aqueuse.